Europäisches Patentamt

European Patent Office

Office européen des brevets

(19)

(11) Numéro de publication: **0 153 895**
**B1**

(12) **FASCICULE DE BREVET EUROPEEN**

(45) Date de publication du fascicule du brevet:
**31.01.90**

(21) Numéro de dépôt: **85400397.7**

(22) Date de dépôt: **01.03.85**

(51) Int. Cl.⁴: **A 01 F 25/20**

(54) Tête de coupe à moyen de régulation du plan de coupe pour matière ensilée.

(30) Priorité: **02.03.84 FR 8403277**

(43) Date de publication de la demande:
**04.09.85 Bulletin 85/36**

(45) Mention de la délivrance du brevet:
**31.01.90 Bulletin 90/5**

(84) Etats contractants désignés:
**BE DE GB NL**

(56) Documents cités:
**EP-A- 0 081 447**
**FR-A- 2 387 744**
**GB-A- 1 189 204**
**GB-A- 2 110 584**
**US-A- 1 923 834**

(73) Titulaire: **S.à.r.l. BOTON-MERLET, Moncoutant Deux-Sèvres (FR)**

(72) Inventeur: **Guitton, André, St. Mesmin, F-85700 Pouzauges (FR)**

(74) Mandataire: **Fruchard, Guy et al, CABINET BOETTCHER 23, rue la Boétie, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention a pour objet une tête de coupe du genre de celles qui sont utilisées sur les machines dites désileuses servant à découper et à extraire un bloc généralement parallélépipèdique dans un tas de matière tassée (fourrage, paille, etc...).

Il existe de nombreuses désileuses munies de moyens divers de guidage le long d'un trajet déterminé d'une tête de coupe à partir de laquelle s'étend vers le bas une lame de coupe dont la longueur peut atteindre et même dépasser un mètre. Il existe aussi deux types principaux de lames de coupe. Selon un premier type, la lame est simple, relativement épaisse; elle présente sur ses arêtes de coupe des dents assez espacées et plutôt profondes et, pendant son fonctionnement, elle est animée d'un mouvement alternatif de coupe à course relativement grande dans le sens de sa dimension longitudinale. Selon un second type, la lame de coupe est double; elle comprend deux lames à denture plutôt fine, appliquées l'une contre l'autre par une de leurs faces principales et, pendant le fonctionnement, elles sont animées de mouvements alternatifs de coupe opposés et relatifs à course relativement faible toujours dans le sens de leur dimension longitudinale.

Quel que soit le moyen de guidage de la tête de coupe et quel que soit le type de la lame, on rencontre avec les désileuses une difficulté certaine à obtenir une coupe qui reste dans un plan vertical sur la totalité du trajet de coupe. Cette difficulté devient plus grande et elle est même gênante quand la matière à découper est tassée plus fortement ou quand elle est de nature plus difficile à couper.

La tendance de la lame à dévier, pendant la coupe, de son plan vertical, ou à chasser par rapport au plan de coupe vertical idéal, a plusieurs conséquences gênantes.

En déviant, ou en chassant, la lame s'incurve d'une valeur croissante à partir de sa tête jusqu'à son extrémité libre. Le frottement dans la matière tassée devient plus important; la coupe nécessite une puissance plus grande et une force plus élevée; de ce fait, la structure entière de la désileuse subit des contraintes plus fortes et elle doit être dimensionnée en conséquence pour les supporter.

La déviation est parfois si importante que lorsque la tête de coupe arrive à la fin de sa course, la lame de coupe vient mordre dans le bâti de la fourche. Il arrive même que la lame de coupe se casse par suite des efforts et des vibrations auxquels elle est soumise quand elle dévie de la trajectoire normale qu'elle devrait suivre.

Pour toutes ces raisons, on est conduit soit à renforcer les désileuses et les lames de coupe d'une manière exagérée par rapport aux conditions de fonctionnement en l'absence de déviation, soit de limiter la longueur des lames de coupe.

On connaît, par le document EP-A 81 447 une tête de coupe, à lame de couteau pour le découpage de blocs de fourrage, perfectionnée en vue de pallier à la déviation du couteau. Selon ce perfectionnement le couteau est incliné pour faire un angle compris entre 1° et 10° dans le sens de sa direction de coupe, son extrémité libre étant plus avant, par rapport à sa position habituelle de coupe à laquelle le couteau est perpendiculaire à la direction de coupe. Toutefois, il est clairement dit dans ce document que ce perfectionnement a pour effet de compenser la déformation du couteau dans le plan de coupe, autrement dit de compenser le phénomène selon lequel l'extrémité libre de couteau tend à avancer moins vite que le reste du couteau en raison de la résistance opposée par le fourrage. Il n'existe donc pas d'action directement correctrice tendant à diriger le couteau vers la trajectoire souhaitée dont il a dévié.

L'invention a pour but principal de parvenir à une tête de coupe perfectionnée capable de suivre un contour de coupe rectangulaire ou substantiellement rectangulaire avec une lame de coupe ne chassant pas, ou ne chassant que d'une manière assez limitée pour ne pas devenir gênante, par rapport à son plan de coupe normal.

Une tête de coupe comprenant un carter contenant un organe moteur une lame de coupe ayant au moins une arête de coupe et accouplée à l'organe moteur, montée sur un organe d'entraînement avec une orientation correspondante à une position de coupe normale de la lame de coupe le long d'une ligne de coupe, selon l'invention, la tête est montée sur l'organe d'entraînement on étant guidée pour pouvoir exécuter un mouvement de pivotement de part et d'autre de sa position de coupe normale autour d'un axe de régulation de la coupe substantiellement parallèle à la lame de coupe; un moyen de manœuvre est relié à la tête de coupe pour la faire pivoter autour de l'axe de régulation de coupe; un détecteur est associé à la tête de coupe ou à une pièce réunie à celle-ci pour détecter toute déviation de la lame de coupe par rapport à la ligne de coupe, ce détecteur commandant le fonctionnement du moyen de manœuvre dans le sens tendant à rapprocher par pivotement autour de l'axe de régulation de coupe, l'arête de coupe du plan de coupe normale contenant la ligne de coupe.

Sur certaines désileuses connues d'un premier type peu répandu, la tête de coupe est montée de manière fixe à l'extrémité d'un bras pivotant qui constitue l'organe d'entraînement, et la tête de coupe décrit un demi-cercle. Dans ce cas, selon l'invention, le pivotement de la tête autour de l'axe de régulation se réalise à l'aide d'un arbre de régulation qui, autrement, n'existerait pas sur cette machine.

Sur d'autres désileuses connues d'un second type, la tête de coupe est pourvue d'un moteur et elle se déplace le long d'un guide rigide qui suit le contour de coupe; ce contour peut se composer alors de trois côtés adjacents d'un rectangle à coins arrondis. Comme dans le cas évoqué ci-dessus, selon l'invention, la tête doit alors être pivotante par rapport à son moteur autour d'un arbre de régulation qui, en général, n'existerait pas sur cette désileuse.

Sur beaucoup de désileuses très répandues d'un troisième type, la tête de coupe est montée à l'extrémité libre d'un bras d'entraînement à longueur variable qui constitue l'organe d'entraînement et elle a déjà une possibilité de pivotement autour d'un arbre parallèle à la lame de coupe. Mais il s'agit seulement d'un arbre d'orientation de la tête de coupe afin que la lame de coupe suive dans sa position de coupe normale la ligne de coupe le long de laquelle elle est déplacée par le bras. Ce montage est employé quand le contour de coupe est celui des trois côtés adjacents d'un rectangle à coins arrondis. Quand un premier côté a été parcouru par la tête, un mécanisme de guidage agit sur cette tête en combinaison avec le bras d'entraînement pour lui imposer au moment voulu le changement d'orientation nécessaire. Par conséquent, dans ces désileuses, la tête de coupe n'est pas libre de pivoter et n'est pas manœuvrée en pivotement autour de l'arbre d'orientation en dehors des changements d'orientation qu'elle doit subir quand elle passe d'un côté à un autre du contour de coupe.

Dans les désileuses du troisième type, l'invention utilise l'arbre d'orientation pour lui faire jouer la fonction d'arbre de régulation de la coupe qu'il ne jouait pas jusqu'à présent. Selon l'invention, l'arbre d'orientation a la fonction supplémentaire d'arbre de régulation de la coupe quand il est combiné à un détecteur de chasse de la lame de coupe et à un moyen de manœuvre de la tête de coupe qui la fait pivoter de manière correctrice quand elle tend à dévier de sa position de coupe normale. Les mouvements correcteurs sont des modifications de faible amplitude de l'orientation de la tête de coupe par rapport à l'orientation qui lui est donnée par le mécanisme de guidage.

En général, une tête de coupe comprend d'une part un carter qui contient un organe moteur, d'autre part une lame de coupe qui s'accouple de manière détachable avec cet organe moteur à une extrémité du carter. L'organe moteur a pour rôle d'imposer à la lame ou aux deux lames, selon le cas, le mouvement alternatif de coupe décrit plus haut.

Selon une caractéristique de l'invention, la tête de coupe est réunie à l'organe d'entraînement par la partie extrême du carter, proche de la lame de coupe, par l'intermédiaire d'un support par rapport auquel elle a une possibilité de mouvement dans un sens perpendiculaire à la ligne de coupe; le support est monté sur l'organe d'entraînement au moyen d'un arbre parallèle à la lame de coupe. Sur les désileuses du troisième type défini plus haut, cet arbre est à la fois l'arbre d'orientation de la tête et l'arbre de régulation de la coupe.

De préférence, le mouvement de la tête de coupe est un basculement et le détecteur de position est monté à la partie extrême du carter opposée à la lame de coupe.

Le moyen de manœuvre peut être réalisé selon deux variantes principales, en fonction du type de la désileuse considérée.

Selon la première variante, quand la désileuse comprend un mécanisme d'orientation de la tête de coupe agissant sur le support de cette dernière comme expliqué ci-dessus, le moyen de manœuvre peut être incorporé au mécanisme d'orientation, par exemple il peut être constitué par un élément à longueur variable tel qu'un vérin qui impose à la tête de coupe des mouvements correcteurs d'orientation sous la dépendance du détecteur de position.

Selon la seconde variante, le moyen de manœuvre est constitué par au moins un vérin qui est interposé entre d'une part l'organe d'entraînement ou une pièce portée par cet organe, d'autre part le carter de la tête ou le support sur lequel est monté ce carter.

Dans un exemple préféré de réalisation de l'invention, le support de la tête de coupe comprend un boîtier dans lequel le carter est contenu avec une possibilité de basculer librement dans un plan perpendiculaire à la ligne de coupe et le détecteur est monté entre le boîtier et le carter, à leur partie extrême opposée à la lame de coupe.

Selon la deuxième variante définie ci-dessus, le bras d'entraînement est pourvu d'une pièce d'orientation qui est montée pivotante autour d'un arbre d'orientation et de régulation et qui est aussi réunie à un mécanisme d'orientation de la tête; le support qui comprend le boîtier contenant le carter du moteur de la tête est monté pivotant autour de l'arbre d'orientation et de régulation de façon à se trouver au moins en partie parallèle à la pièce d'orientation au-delà que celle-ci par rapport au bras d'entraînement; deux vérins espacés dans le sens de la ligne de coupe sont interposés entre la pièce d'orientation et le boîtier. Ainsi, selon l'extension donnée à l'un ou à l'autre de ces vérins, le boîtier et la tête de coupe peuvent avoir des mouvements correcteurs d'orientation par rapport à la position générale d'orientation qui leur est imposée par le mécanisme d'orientation.

Des butées réglables interposées également entre la pièce d'orientation et le boîtier peuvent servir à limiter à une valeur prédéterminée l'amplitude maximum des mouvements correcteurs d'orientation.

On donnera maintenant, sans intention limitative et sans exclure aucune variante, une description d'un exemple préféré de réalisation dans le cas particulier d'une désileuse du troisième type défini plus haut. On se reportera aux dessins annexés dans lesquels:

— la figure 1 est une vue générale en perspective d'une tête de coupe à régulation du plan de coupe conformément à l'invention, représentée en position d'utilisation,

— la figure 2 est une vue de côté, en coupe partielle par un plan vertical de la tête de la figure 1,

— les figures 3 et 4 sont des vues de dessus de la tête de coupe de la figure 1 montrant respectivement deux positions différentes extrêmes de pivotement pour correction de la chasse de la lame de coupe,

– la figure 5 est une vue de dessus, simplifiée, d'une tête de coupe montrant une variante de réalisation pour la régulation du plan de coupe conformément à l'invention.

La tête de coupe désignée par la référence générale 1 est entraînée en déplacement par un bras d'entraînement 2 à l'extrémité libre duquel elle est montée; elle comprend un carter 3 mieux visible sur la figure 2 et une lame de coupe 4 qui a deux arêtes de coupe opposée 4A, 4B pour découper dans de la matière tassée un bloc ayant un contour à trois côtés perpendiculaires dont un côté seulement 5 est schématisé partiellement par une ligne de coupe dessinée en trait mixte 5. Le carter 3 contient un organe moteur comprenant un moteur hydraulique 6 (figure 6) partiellement saillant pour donner à la lame de coupe 4 – qui peut être simple ou double comme expliqué plus haut – un mouvement alternatif de coupe dans le sens de sa coupe. La tête 1 et la lame de coupe 4 sont mises à l'orientation voulue dans le sens de la ligne de coupe 5 au moyen d'une biellette 7 qui fait partie d'un mécanisme d'orientation. Pour trouver une description complète de ce mécanisme, on pourra se reporter au document FR-A 80 11899.

La bras d'entraînement 2 porte un arbre 8 disposé parallèlement à la lame de coupe 4 occupant sa position de coupe normale; une pièce d'orientation 9 montée pivotante autour de l'arbre 8 s'étend transversalement au bras 2 et elle est articulée à l'une de ses parties extrêmes au moyen d'un axe 10 avec la biellette 7 du mécanisme d'orientation.

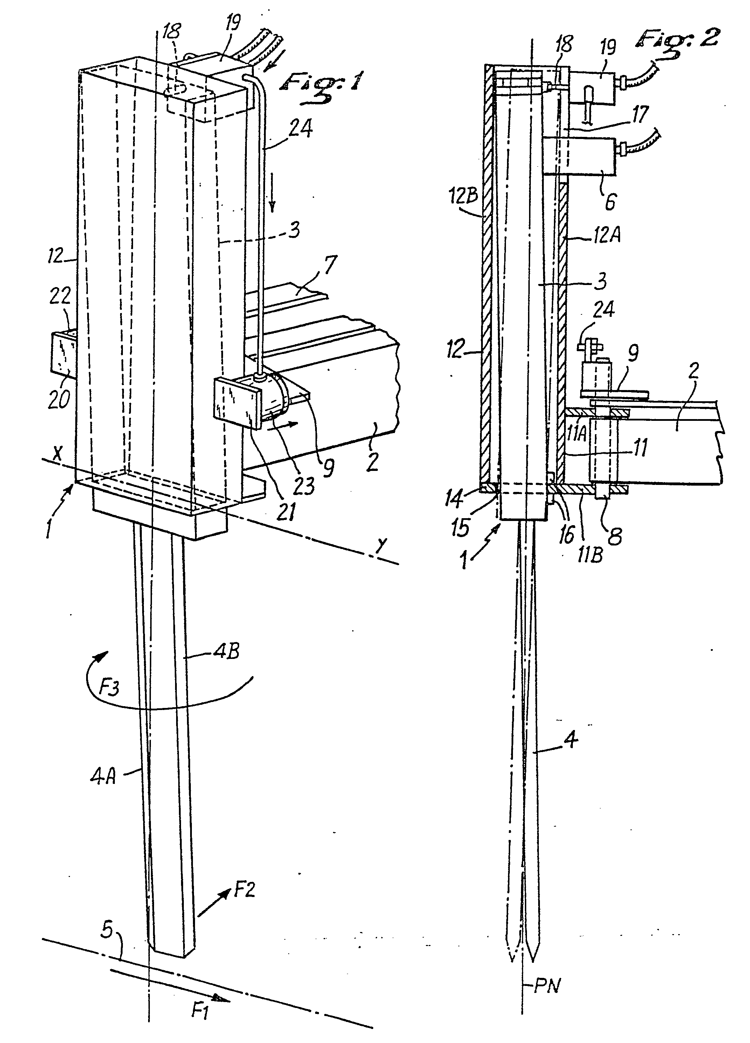

Un support 11 ayant de préférence deux branches 11A, 11B espacées est montée aussi, par l'intermédiaire de ces branches, pour pouvoir pivoter librement autour du même arbre 8. Le support 11 comprend avantageusement un boîtier 12 qui contient le carter 3 de la tête de coupe 1. Dans le sens parallèle à la ligne de coupe 5, c'est-à-dire dans un sens transversal dans l'ensemble au bras d'entraînement 2, le carter 3 est immobilisé en déplacement à l'intérieur du boîtier 12. De préférence il est calé à l'aide de galets ou de billes 13 engagés partiellement dans des rainures correspondantes prévues, par exemple, dans la paroi du carter 3. Dans le sens transversal à la ligne de coupe 5, le carter 3 a à l'intérieur du boîtier 12 une liberté de basculement, facilitée par les galets ou les billes 13, autour d'un axe X–Y représentée sur la figure 1 seulement. Cet axe X–Y se situe au niveau de la partie extrême du carter 3 proche de la lame de coupe 4. Pour permettre le basculement, le boîtier 12 a une cloison transversale inférieure 14 dans laquelle est ménagée une ouverture 15 qui laisse passer avec jeu dans le plan de basculement la partie extrême inférieure du carter 3. Ce dernier est retenu en position, dans le sens de sa dimension longitudinale, par deux butées 16 qui lui sont fixées de part et d'autre de la cloison inférieure 14. Dans le plan du basculement, le boîtier 12 a une dimension intérieure supérieure à la largeur extérieure correspondante du carter 3. Ainsi, comme le montre la figure 2, quand la lame de coupe 4 dévie ou chasse vers l'intérieur ou vers l'extérieur du bloc découpé par rapport à sa position de coupe normale indiquée par un trait mixte PN, la tête de coupe 1 bascule jusqu'à ce que la partie extrême supérieure du carter 3 vienne s'appuyer contre la partie extrême supérieure d'une paroi ou de la paroi opposée du boîtier 12. Sur la figure 2, l'une de ses positions est représentée en trait plein et l'autre en trait mixte.

A sa partie supérieure, l'une des parois latérales 12A du boîtier 12 a une échancrure 17 qui laisse passer librement le moteur hydraulique saillant 6 et une tige 18 de manœuvre du tiroir d'un distributeur hydraulique 19 fixé à ladite paroi 12A. Cette tige de manœuvre 18 est réunie par une articulation du carter 3 de sorte que les mouvements de ce dernier font changer l'état de fonctionnement du distributeur 19; le rôle de ce dernier apparaîtra plus loin.

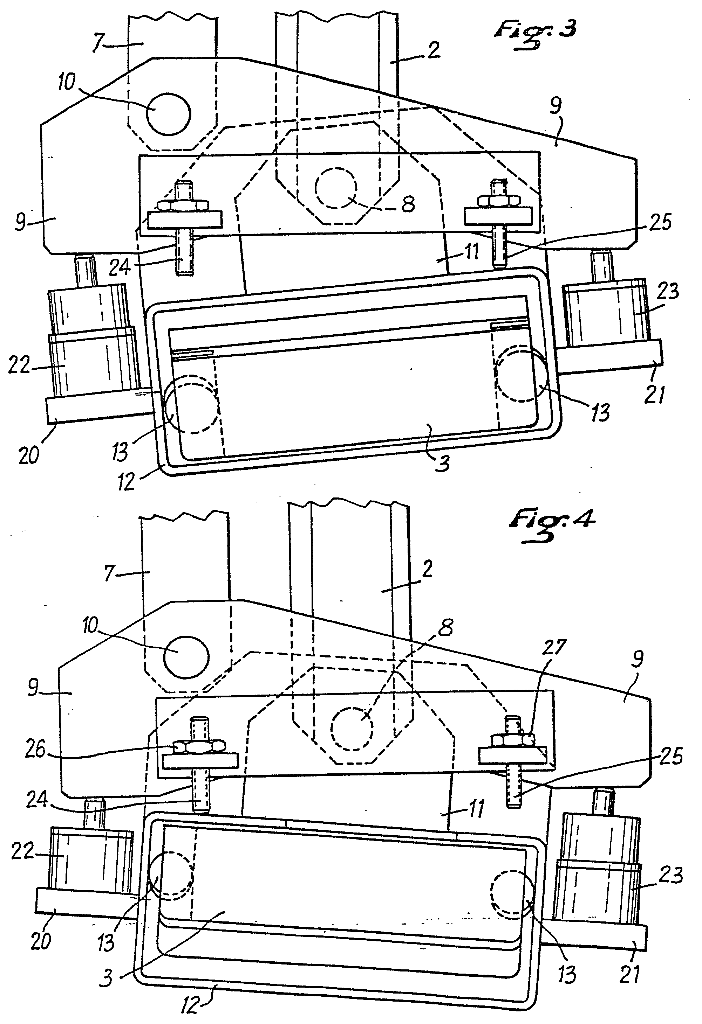

Sur ses faces extérieures opposées, le boîtier 12 est pourvu dans le sens de la ligne de coupe 5 (figures 1 et 3, 4) de deux oreilles 20, 21 situées au niveau de la pièce d'orientation 9, avec un espacement par rapport à l'axe X–Y à l'opposé de la lame de coupe 4. A chacune de ces oreilles 20, 21 est fixé par une extrémité un vérin hydraulique 22, 23 qui prend appui par son extrémité opposée contre la pièce d'orientation 9. Ces vérins 22, 23 sont reliés chacun par une tubulure correspondante au distributeur 19; une seule tubulure 24 pour le vérin 23 est visible sur la figure 1.

Les vérins 22, 23 sont de préférence à simple effet et ils tendent à écarter le boîtier 12 de la pièce d'orientation 9 quand ils sont alimentés en fluide sous pression à partir du distributeur 19. Comme ces vérins 22, 23 sont montés symétriquement de part et d'autre du plan médian de la tête de coupe 1 qui passe par l'arbre 8, ils ont pour effet, quand ils sont alimentés, de faire pivoter l'ensemble de la tête de coupe 1 et de boîtier 12 qui la contient partiellement, autour de l'arbre 8, par rapport à une position médiane de la tête de coupe 1 qui correspond à sa position normale de coupe. Cette position normale de coupe est donnée à la tête 1, avec l'orientation voulue par rapport au bras 2, par la pièce d'orientation 9 qui est orientée elle-même autour de l'arbre 8 par la biellette 7. A la position médiane de la tête de coupe 1 ayant l'orientation générale voulue, les vérins 22, 23 non alimentés, mais tenus sous pression, sont en contact avec la pièce d'orientation 9.

Le fonctionnement du mode de réalisation que l'on vient de décrire est le suivant. On suppose que la tête de coupe 1 est déplacée de gauche à droite, comme indiqué par une flèche F1 sur la figure 1, par le bras d'entraînement 2, pour suivre avec l'orientation voulue une ligne de coupe 5, en se trouvant à une position de coupe normale indiquée par le trait mixte PN sur la figure 2; dans cette situation, l'arête de coupe active de la lame 4 est son arête 4B. Tant que la lame 4 travaille dans son plan, à sa position de coupe normale, les vérins 22, 23 sont au contact du boîtier 12 qui occupe sa position médiane par rapport à la pièce d'orientation 9 et le carter 3 est à sa position médiane à l'intérieur du boîtier 12, à égale distance de la paroi 12A et de la paroi opposée 12B.

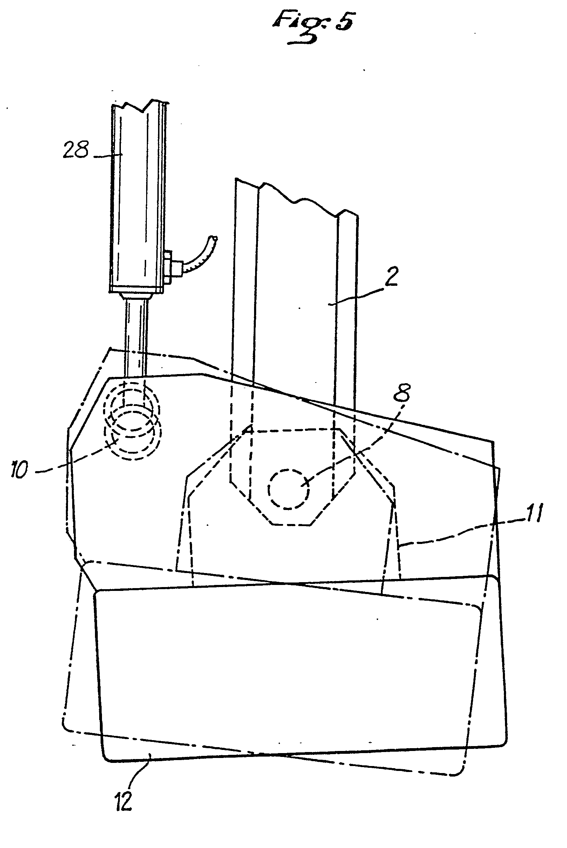

Dès que la lame 4 commence à chasser ou à dévier vers l'intérieur du bloc découpé, vers le bras d'entraînement 2, comme indiqué par une flèche F2 sur la figure 1, en s'éloignant de sa position de coupe normale, le carter 3 bascule autour de l'axe X–Y jusqu'à sa rencontre avec la paroi 12B, en tirant sur la tige de manœuvre 18. De ce fait, le distributeur hydraulique 19 alimente le vérin 23. Celui-ci s'allonge et fait pivoter la tête 1 autour de l'arbre 8 (figure 4) en modifiant légèrement son orientation par rapport à l'orientation que lui avait imposée la pièce d'orientation 9. Le vérin 23 mis en action est celui qui fait pivoter la tête 1 dans le sens indiqué par une flèche F3 sur la figure 1, qui est le sens de rotation qui tend à rapprocher l'arête de coupe active 4B du plan de coupe normale contenant la ligne de coupe 5. La lame 4 est alors dirigée vers la ligne de coupe normale 5 et, en coupant, elle revient vers cette ligne 5 et retrouve sa position normale de coupe. Le distributeur 19 est remis à sa position neutre et le vérin 23 revient à sa position initiale de contact sous pression.

Une déviation en sens inverse par rapport à sa position normale de coupe provoque un basculement en sens inverse autour de l'axe X–Y de la tête de coupe 1 et une rotation correctrice correspondante produite par le vérin 22.

Selon les conditions d'utilisation de la désileuse, il peut être souhaitable de régler l'amplitude du mouvement correcteur. A cette fin, il est prévu sur la pièce d'orientation 9, de part et d'autre de l'arbre 8, deux vis de butée 24, 25 pouvant être réglées et bloquées en position au moyen d'écrous 26, 27. Chacune d'elles est rencontrée par le boîtier 12 quand celui-ci pivote sous l'effet du vérin opposé 23 ou 22.

La figure 5 se rapporte à une variante de réalisation selon laquelle les deux vérins 22, 23 sont remplacés par un unique vérin 28, à double effet, qui constitue la totalité ou une partie de la bielle 7 du mécanisme d'orientation. Dans ce cas, les vérins 22, 23 étant supprimés, les oreilles 20, 21 n'existent plus et le boîtier 12 peut être fixé directement à la pièce d'orientation 9. Les mouvements correcteurs se font par allongement ou raccourcissement du vérin 28 par rapport à sa longueur normale qui correspond à la position de coupe normale de la tête de coupe à laquelle elle est dessinée en trait plein. Une position correctrice provoquée par une rétraction du vérin 28 est représentée en trait mixte sur la figure 5. Tout autre moyen à longueur variable pourrait remplacer le vérin 28 dans le mécanisme d'orientation pour en jouer le rôle.

Dans cette variante, le support 11 avec son boîtier 12 existent encore ainsi que le distributeur 19 (non représenté sur la figure 5 pour la clarté du dessin). On notera cependant que ce moyen de détection de la déviation ou de la chasse de la lame de coupe n'est pas le seul possible. Quand la lame 4 commence à dévier de sa position normale, elle donne naissance à des efforts et à des contraintes supplémentaires que l'on peut exploiter autrement que par le basculement du carter 3 afin de détecter cette déviation.

Avec une tête de coupe conforme à l'invention, la coupe se faisant sinon toujours exactement le long de la ligne mais au moins avec de faibles déviations et avec une lame peu écartée de sa position de coupe normale, la coupe exige moins d'énergie, l'avance de la lame est plus rapide; en outre la lame et l'ensemble de la désileuse sont soumis à des efforts moins élevés. Comme la lame subit moins de contrainte, elle peut être plus fine et plus longue. De plus, du fait qu'il n'existe plus de déviation importante à craindre, on peut allonger la lame et la faire passer au plus près des dents et de bâti de la fourche de la désileuse; il en résulte qu'il subsiste peu de matière non tranchée à arracher quand on enlève le bloc après l'opération de coupe.

Quand la tête 1 est entraînée en sens inverse et que la lame de coupe 4 agit par son arête de coupe opposée 4B, le fonctionnement du distributeur 19 est inversé puisque les mouvements correcteurs imposés à la lame doivent aussi être faits en sens inverse.

Selon l'invention, étant donné que le bras d'entraînement 2 ou tout organe équivalent est généralement accouplé pour son déplacement à un moteur hydraulique, il est avantageux de monter le distributeur 19 en série avec ce moteur hydraulique sur le circuit d'alimentation de ce dernier. De ce fait, l'inversion du circuit hydraulique du moteur hydraulique, inversion nécessaire à l'inversion du sens de déplacement de la tête de coupe 1, se traduit par une inversion automatique de l'alimentation et du fonctionnement du distributeur 19.

## Revendications

1. Tête de coupe comprenant un carter (3) contenant un organe moteur, une lame de coupe (4) ayant au moins une arête de coupe (4A, 4B) et accouplée à l'organe moteur, montée sur un organe d'entraînement (2) avec une orientation correspondante à une position de coupe normale de la lame de coupe (4) le long d'une ligne de coupe (5), caractérisée en ce que cette tête (1) est montée sur l'organe d'entraînement (2) en étant guidée pour pouvoir exécuter un mouvement de pivotement de part et d'autre de sa position de coupe normale autour d'un axe de régulation de coupe substantiellement parallèle à la lame de coupe (4), un moyen de manœuvre (22, 23, 28) est relié à la tête de coupe (1) pour la faire pivoter autour dudit axe de régulation de coupe, un détecteur (12, 19) est associé à la tête de coupe (1) ou à une pièce réunie à celle-ci pour détecter toute déviation de la lame de coupe (4) par rapport à la ligne de coupe (5), ce détecteur commandant le fonctionnement du moyen de manœuvre (22, 23, 28) dans le sens tendant à rapprocher, par pivotement autour dudit axe de régulation de coupe (8), l'arête de coupe (4A, 4B) du plan de coupe normale contenant la ligne de coupe (5).

2. Tête de coupe selon la revendication 1 montée sur une désileuse ayant comme organe d'entraînement un bras (2) muni d'un arbre d'orientation (8) autour duquel est montée pivotante une pièce d'orientation (9) accouplée par un arbre (10) à un mécanisme d'orientation, caractérisée en ce que l'axe de régulation est confondu avec l'axe géométrique de l'arbre d'orientation (8).

3. Tête de coupe selon la revendication 1 caractérisée en ce que la tête de coupe (1) est réunie à un arbre dont l'axe géométrique constitue l'axe de régulation de la coupe par l'intermédiaire d'un support (11) avec une possibilité de mouvement par rapport à ce dernier dans un sens perpendiculaire à la ligne de coupe (5) quand la lame de coupe dévie de sa position de coupe normale, le détecteur détectant les mouvements de la tête de coupe (1) par rapport au support (11).

4. Tête de coupe selon la revendication 3 caractérisée en ce que la possibilité de mouvement de la tête de coupe (1) par rapport au support (11) est celle d'un basculement autour d'un axe (X–Y) parallèle à la ligne de coupe (5), de part et d'autre de sa position de coupe normale quand la lame de coupe (4) dévie de sa position de coupe normale, le détecteur étant réuni à la fois au support (11) et à la tête de coupe (1) pour détecter ce basculement.

5. Tête de coupe selon la revendication 1 caractérisée en ce que le moyen de manœuvre est un élément à longueur variable (28) incorporé au mécanisme d'orientation et capable de modifier l'orientation de la tête de coupe (1) de part et d'autre de sa position de coupe normale.

6. Tête de coupe selon la revendication 1 caractérisée en ce que le moyen de manœuvre est constitué par deux vérins (22, 23) disposés de part et d'autre du plan médian de la tête de coupe (1) passant par l'axe de régulation et interposés entre la tête de coupe (1) ou une pièce réunie à celle-ci et la pièce d'orientation (9).

7. Tête de coupe selon la revendication 3 caractérisée en ce que le support (11) comprend un boîtier (12) qui contient le carter (3) de la lame de coupe (1) avec une liberté de mouvement dans un sens perpendiculaire à la ligne de coupe (5) entre deux parois opposées (12A, 12B) de ce boîtier (12), le détecteur détectant les déplacements du carter (3) à l'intérieur du boîtier (12) et commandant en conséquence le moyen de manœuvre.

8. Tête de coupe selon la revendication 7 caractérisée en ce que le carter (3) est supporté par sa partie extrême inférieure à l'intérieur du boîtier (12), immobilisé en déplacement dans le sens longitudinal de la tête de coupe (1), immobilisé de préférence à l'aide de galets (13) dans le sens parallèle à la ligne de coupe (5), libre en basculement entre lesdites parois opposées (12A, 12B).

9. Tête de coupe selon la revendication 7 caractérisée en ce que le détecteur est monté sur l'une desdites parois opposées (12A, 12B), de préférence à l'extrémité correspondante à l'extrémité du carter (3) opposée à la lame de coupe (4).

10. Tête de coupe selon la revendication 1 caractérisée en ce que le détecteur est un distributeur hydraulique (19) ayant une tige (18) de manœuvre de tiroir, réuni d'une part à la tête de coupe (1), d'autre part à une pièce fixe par rapport à cette tête de coupe (1), tandis que le moyen de manœuvre est constitué par au moins un vérin (22, 23, 28) alimenté en fluide sous pression à travers le distributeur hydraulique (19).

11. Tête de coupe selon la revendication 10 montée sur un organe d'entraînement (2) accouplé à un moteur hydraulique assurant son déplacement, caractérisée en ce que le distributeur hydraulique (19) est monté en série sur le circuit hydraulique de ce moteur.

## Claims

1. A cutting head comprising a casing (3) containing a drive member, a cutting blade (4) having at least one cutting edge (4A, 4B) and coupled to the drive member, mounted on an entrainment member (2) with an orientation corresponding to a normal cutting position of the cutting blade (4) along a line of cut (5), characterised in that said head (1) is mounted on the entrainment member (2), while being guided, in order to be able to perform a pivotal movement on respective sides of its normal cutting position about a cut-regulating axis substantially parallel to the cutting blade (4), an operating means (22, 23, 28) is connected to the cutting head (1) to cause it to pivot about said cut-regulating axis, a detector (12, 19) is associated with the cutting head (1) or a portion connected thereto to detect any deviation of the cutting blade (4) with respect to the line of cut (5), said detector controlling the operation of the operating means (22, 23, 28) in the direction tending, by pivotal movement about said cut-regulating axis (8), to move the cutting edge (4A, 4B) towards the plane of normal cutting containing the line of cut (5).

2. A cutting head according to claim 1 mounted on a silo extracting machine having as the entrainment member an arm (2) provided with an orientation shaft (8) around which an orientation portion (9) is pivotably mounted, the orientation portion being coupled by a shaft (10) to an orientation mechanism, characterised in that the cut-regulating axis is coincident with the geometrical axis of the orientation shaft (8).

3. A cutting head according to claim 1 characterised in that the cutting head (1) is connected to a shaft whose geometrical axis constitutes the axis for regulating the cut by way of a support (11) with a capacity for movement with respect to the latter in a direction perpendicular to the line of cut (5) when the cutting blade deviates from its normal cutting position, the detector detecting the movements of the cutting head (1) with respect to the support (11).

4. A cutting head according to claim 3 characterised in that the capacity for movement of the cutting head (1) with respect to the support (11) is the capacity for a rocking movement about an axis (X–Y) parallel to the line of cut (5) on respective sides of its normal cutting position when the cutting blade (4) deviates from its normal cutting position, the detector being connected both to the support (11) and to the cutting head (1) to detect said rocking movement.

5. A cutting head according to claim 1 characterised in that the operating means is an element (28) of variable length, which is incorporated in the orientation mechanism and which is capable of modifying the orientation of the cutting head (11) on respective sides of its normal cutting position.

6. A cutting head according to claim 1 characterised in that the operating means is formed by two jacks (22, 23) disposed on respective sides of the central plane of the cutting head (1) passing through the cut-regulating axis, and interposed between the cutting head (1) or a portion connected to same and the orientation portion (9).

7. A cutting head according to claim 3 characterised in that the support (11) comprises a housing (12) which contains the casing (3) of the cutting blade (1) with freedom of movement in a direction perpendicular to the line of cut (5) between two oppositely disposed walls (12A, 12B) of said housing (12), the detector detecting the displacements of the casing (3) within the housing (12) and consequentially actuating the operating means.

8. A cutting head according to claim 7 characterised in that the casing (3) is supported by its lower end portion within the housing (12), being immobilised in respect of displacement in the longitudinal direction of the cutting head (1), preferably immobilised by means of rollers (13) in the direction parallel to the line of cut (5) and free to perform a rocking movement between said oppositely disposed walls (12A, 12B).

9. A cutting head according to claim 7 characterised in that the detector is mounted on one of said oppositely disposed walls (12A, 12B), preferably at the end corresponding to the end of the casing (3) which is opposite to the cutting blade (4).

10. A cutting head according to claim 1 characterised in that the detector is a hydraulic distributor (19) having a slide member-actuating rod (8) and connected on the one hand to the cutting head (1) and on the other hand to a portion which is fixed with respect to said cutting head (1), while the actuating means is formed by at least one jack (22, 23, 28) which is supplied with fluid under pressure through the hydraulic distributor (19).

11. A cutting head according to claim 10 which is mounted on an entrainment member (2) coupled to a hydraulic motor for producing displacement thereof characterised in that the hydraulic distributor (19) is mounted in series on the hydraulic circuit of said motor.

**Patentansprüche**

1. Schneidkopf, mit einem ein Antriebsorgan enthaltenden Gehäuse (3), mit einer mit dem Antriebsorgan gekoppelten Schneidklinge (4), die mindestens eine Schneide (4A, 4B) aufweist und die an einem Mitnahmeelement (2) mit einer Ausrichtung befestigt ist, die einer senkrechten Schneidstellung der Schneidklinge (4) längs einer Schnittlinie (5) entspricht, dadurch gekennzeichnet, daß dieser Kopf (1) auf dem Mitnahmeelement (2) geführt befestigt ist und eine Schwenkbewegung nach beiden Seiten seiner senkrechten Schneidstellung um eine zur Schneidklinge (4) im wesentlichen parallele Schnittregelungsachse ausführen kann, daß ein Betätigungsmittel (22, 23, 28) mit dem Schneidkopf (1) verbunden ist, der dadurch um die genannte Schnittregelungsachse schwenkbar ist, daß ein Detektor (12, 19) dem Schneidkopf (1) oder einem damit verbundenen Teil zugeordnet ist und jede Abweichung der Schneidklinge (4) gegenüber der Schnittlinie (5) erfaßt, wobei der Detektor die Funktion des Betätigungsmittels (22, 23, 28) in der Richtung steuert, in der durch Verschwenken um diese Schnittregelungsachse (8) die Schneide (4A, 4B) an die senkrechte Schnittebene, die die Schnittlinie (5) enthält, heranbringbar ist.

2. Schneidkopf nach Anspruch 1, der an einer Silofräse befestigt ist, die als Mitnahmeorgan einen Arm (2) besitzt, der an einer Ausrichtungsachse (8) befestigt ist, um welche ein Ausrichtungsteil (9) schwenkbar gehalten ist, das mittels einer Achse (10) an einem Ausrichtungsmechanismus angekoppelt ist, dadurch gekennzeichnet, daß die Regelungsachse mit der geometrischen Achse der Ausrichtungsachse (8) übereinstimmt.

3. Schneidkopf nach Anspruch 1, dadurch gekennzeichnet, daß der Schneidkopf (1) durch Zwischenfügen eines Trägers (11) mit einer Achse, deren geometrische Achse die Schnittregelungsachse bildet, derart verbunden ist, daß eine Bewegung relativ zum Träger in einer Richtung senkrecht zur Schnittlinie (5) möglich ist, wenn die Schneidklinge von ihrer senkrechten Schneidstellung abweicht, wobei der Detektor die Bewegungen des Schneidkopfes (1) gegenüber dem Träger (11) erfaßt.

4. Schneidkopf nach Anspruch 3, dadurch gekennzeichnet, daß die Möglichkeit der Bewegung des Schneidkopfes (1) gegenüber dem Träger (11) die einer Wippe um eine zur Schnittlinie (5) parallele Achse (X–Y) und zu beiden Seiten der senkrechten Schneidstellung ist, wenn die Schneidklinge (4) von ihrer senkrechten Schneidstellung abweicht, wobei der Detektor gleichzeitig mit dem Träger (11) und dem Schneidkopf (1) zum Abtasten dieser Wippe verbunden ist.

5. Schneidkopf nach Anspruch 1, dadurch gekennzeichnet, daß das Betätigungsmittel ein Element (28) variabler Länge ist, das im Ausrichtungsmechanismus eingebaut ist und in der Lage ist, die Ausrichtung des Schneidkopfes (1) zu beiden Seiten seiner senkrechten Schneidstellung zu ändern

6. Schneidkopf nach Anspruch 1, dadurch gekennzeichnet, daß das Betätigungsmittel durch zwei Hubvorrichtungen (22, 23) gebildet ist, die zu beiden Seiten der durch die Regelungsachse gehenden Mittelebene des Schneidkopfes (1) und zwischen dem Schneidkopf (1) oder einem damit verbundenen Teil und dem Ausrichtungsteil (9) angeordnet sind.

7. Schneidkopf nach Anspruch 3, dadurch gekennzeichnet, daß der Träger (11) einen Kasten (12) aufweist, der das Gehäuse (3) der Schneidklinge (1) mit einer Bewegungsfreiheit senkrecht zur Schnittlinie (5) zwischen seinen zwei gegenüberliegenden Wänden (12A, 12B) aufweist, wobei der Detektor die Verschiebungen des Gehäuses (3) im Inneren des Kastens (12) erfaßt und infolgedessen das Betätigungsmittel steuert.

8. Schneidkopf nach Anspruch 7, dadurch gekennzeichnet, daß das Gehäuse (3) durch seinen äußeren unteren Teil im Inneren des Kastens (12) abgestützt, in Längsrichtung des Schneidkopfes (1) unverschieblich, vorzugsweise durch Rollen (13) in einer Richtung parallel zur Schnittlinie (5) unbeweglich und zwischen den gegenüberliegenden Wänden (12A, 12B) frei wippenartig verschwenkbar ist.

9. Schneidkopf nach Anspruch 7, dadurch gekennzeichnet, daß der Detektor auf einer der genannten gegenüberliegenden Wände (12A, 12B), vorzugsweise an der der Außenseite des Gehäuses (3) entsprechenden, der Schneidklinge (4) gegenüberliegenden Außenwand befestigt ist.

10. Schneidkopf nach Anspruch 1, dadurch gekennzeichnet, daß der Detektor ein hydraulischer Steuerventilblock (19) mit einer Schieberstange (18) ist, die einerseits mit dem Schneidkopf (1) und andererseits mit einem gegenüber dem Schneidkopf (1) festen Teil verbunden ist, während das Betätigungsmittel durch mindestens eine Hubvorrichtung (22, 23, 28) gebildet ist, die vom hydraulischen Steuerventilblock (19) unter Druck flüssigkeitsgespeist ist.

11. Schneidkopf nach Anspruch 10, der auf einem Mitnahmeorgan (2) befestigt ist, das mit einem Hydraulikantrieb zu dessen Verschiebung gekoppelt ist, dadurch gekennzeichnet, daß der hydraulische Steuerventilblock (19) in Reihe zum Hydraulikschaltkreis dieses Antriebs angeordnet ist.

Fig. 1

Fig. 2

Fig. 3

Fig. 4

Fig. 5